# EUROPEAN PATENT APPLICATION

(11) **EP 4 624 922 A1**
(43) Date of publication of application: **01.10.2025**
(21) Application number: 24172304.8
(22) Date of filing: 25.04.2024
(51) Int. Cl.: G01N 30/78, G01N 30/88

(54) **METHOD AND DEVICE FOR IDENTIFYING BIOACTIVE COMPOUNDS**

(30) Priority: 26.03.2024 EP 24166592
(71) Applicant: Eberhard Karls Universität Tübingen, 72074 Tübingen (DE)
(72) Inventor: Brötz-Oesterhelt, Heike, 72070 Tübingen (DE); Geibel, Christian, 72070 Tübingen (DE); Hernandez, Albert, Buffalo, NY 14222 (US); Knoblauch, Simon, 72076 Tübingen (DE); Petras, Daniel, 67580 Hamm am Rhein (DE); Schubert, Julian, 72076 Tübingen (DE)
(74) Representative: Ostertag & Partner Patentanwälte mbB

(57) **Abstract**

The present invention provides a method and a device for identifying bioactive compounds complex mixtures. The method includes provision of a sample that may comprise at least one bioactive compound. The method further includes a chromatographic separation of the sample for generating a fractionated sample flow (11). The fractionated sample flow (11) is split into a first fractionated sample flow (21) and a second fractionated sample flow (22). The method further includes a structural analysis of the first fractionated sample flow (21) for generating a structural profile (400) of the first fractionated sample flow. Further, the method includes a bioactivity analysis of the second fractionated sample flow (22) for generating a bioactivity profile (400) of the second fractionated sample flow. The structural profile (400) of the first fractionated sample flow (21) and the bioactivity profile (400) of the second fractionated sample flow (22) are correlated in order to detect and assign bioactive compounds within the fractionated sample flow.

## Description

The present invention relates to a method for identifying bioactive compounds, to a solid support for bioactivity analysis and to a system for performing a method for identifying bioactive compounds.

Bioactive compounds play an important role in the development of novel drugs and other pharmaceutical products. The search for pharmaceutically interesting lead structures has been going on for a long time and the development of new drugs is constantly being driven forward. In the field of antibiotics in particular, there is a constant need to develop new antibiotically active substances, as medicine is confronted with constantly increasing resistances to the antibiotics currently available.

The search for antibiotic compounds has been tackled for decades. Traditionally, the search is tedious and takes years, as single compounds need to be isolated to be tested for their activity. The pinpointing of the bioactivity to one distinct mass and the isolation of the suspected molecule is a slow process, as usually many fractions have to be collected and analyzed. Not only is this a time-consuming, but also very expensive process.

Some bioactive compounds, especially some antibiotics, tend to lose their activity after some time due to, for example, rising antimicrobial resistances of some bacteria, due to a multitude of reasons like mal- or overprescription of antibiotics in a clinical setting. Therefore, new antibiotics are needed and the pace for finding new antibiotics needs to be as high as possible.

Some high-throughput methods for the finding of antibiotics have been published (e.g., Hamburger et al., Pharm Biol. 2019 Dec; 57(1):328-334, Mahmoud et al., Front. Pharmacol. 2020 11:1246 or Kool et al., SLAS Discovery 2011, 16, 8, 917-924), but there is still a need to develop streamlined processes for the finding of new and effective antibiotics.

The investigation and analysis of bioactive substances is also of great interest beyond pharmaceutical and biomedical applications. For instance, the compounds can be used in research to inhibit, activate or modulate biological processes and understand those processes better.

Advances in bioanalytical methods have yielded fascinating molecular insights into the mechanisms of life. Within the numerous analytical approaches, mass spectrometry represents one of the most sensitive and selective techniques that can provide molecular inventories from mega-Dalton protein complexes to small metabolites.

One part of biology and biochemistry focuses on analyzing metabolites, i. e. metabolic products, in biological systems. This field of research is also known as metabolomics, wherein the metabolome represents a complete set of metabolites in a biological system like a cell, tissue, organ, or organism.

Metabolites are typically small molecules that are produced by metabolic processes in cells and tissues. These include sugars, fatty acids, amino acids, hormones and specialized metabolites, including a wide chemical diversity. The research field of metabolomics typically aims at measuring and analyzing these metabolites in order to gain insights into the physiological states of an organism. This is based on the fact that metabolic pathways are closely linked to health status, diseases, environmental factors and genetic variations.

Metabolomics uses various analytical techniques, in particular mass spectrometry (MS), to identify and quantify a wide range of metabolites in biological samples. These techniques enable researchers to create complex metabolic profiles and, where appropriate, to place them in a functional context.

An important aspect and a particular challenge of metabolomics is to link the information obtained about the metabolites with the phenotype and/or the functions of the respective biological system. The so-called functional metabolomics aims to investigate the functional roles of metabolites at the scale of the metabolome.

Also in natural product research, for example, researchers are faced with the task of characterizing biologically active (bioactive) compounds from a complex mixture in terms of function and structure.

In light of the state of the art, the inventors addressed the problem of providing a method that is capable of identifying one or more biologically active components from a possibly very complex sample with a large number of components. In particular, the method should be able to be carried out with a high-throughput and/or with as little time as possible and, in particular, it should also be accessible to automatization.

This problem is solved by a method as described in claim 1. Preferred embodiments of this method result from the claims dependent on claim 1. This problem is further solved by a solid support for bioactivity analysis and by a system for performing a method for analyzing bioactive compounds, as it is apparent from the further claims.

The method of the invention is provided for identifying bioactive compounds, preferably from complex mixtures. The method comprises the following steps:
a. Providing a sample comprising at least one bioactive compound;
b. Chromatographic separation of the sample for generating a fractionated sample flow;
c. Splitting the fractionated sample flow into a first fractionated sample flow and a second fractionated sample flow;
d. Structural analysis, preferably based on biophysical or biochemical parameters of the compounds, of the first fractionated sample flow for generating a structural profile of the first fractionated sample flow;
e. Bioactivity analysis of the second fractionated sample flow for generating a bioactivity profile of the second fractionated sample flow;
f. Correlating the structural profile of the first fractionated sample flow and the bioactivity profile of the second fractionated sample flow in order to detect and assign bioactive compounds within the fractionated sample flow.

The term "bioactive compounds" generally relates to substances of any kind which have a biological activity, i. e. which may have an influence on a living organism. Moreover, the term "bioactive compounds" also encompasses related compounds like potential biomarkers for certain diseases or pathological conditions.

The term "fractionated sample flow" is meant in the sense that the compounds within the sample are separated by chromatographic separation resulting in a continuous eluate with the separated compounds which is the fractionated sample flow.

The term "structural profile" is meant in the sense that the profile shows a distribution of the structural properties, preferably mass spectrometric spectra, across the (continuous) fractions of the sample flow.

The term "bioactivity profile" is meant in the sense that the profile shows a distribution of the bioactivity properties, like e. g. antimicrobial activity, across the (continuous) fractions of the sample flow.

For example, the sample may be a complex mixture comprising a plurality of chemical compounds, including one or more with potential biological activity.

Preferably, the chromatographic separation is based on biophysical parameters of the substances in the sample and is preferably performed by liquid chromatography, especially by high performance liquid chromatography (HPLC), e. g. ultra-high performance liquid chromatography ((U)HPLC).

With conventional methods, a bioactivity test of the fractions of an HPLC eluate is usually carried out first. The structural analysis, especially mass spectrometry, of interesting fractions is only carried out later. In contrast, the approach according to the invention rapidly identifies the bioactive compound by the bioactivity analysis and provides structural insights from the parallel structural analysis, especially by parallel mass spectrometry data. This process speeds up both the dereplication and structure elucidation process, as it avoids rediscovery of already known compounds and rapidly provides target molecules for full compound purification and full structure elucidation (e. g. through orthogonal methods like NMR, MS or chemical derivatization). Thus, the method according to the invention can considerably accelerate the search for new bioactive compounds and their identification. In addition, disadvantages are avoided which result from the need to retain the fractions and the intermediate storage of the fractions which are generally necessary with conventional methods. For instance, intermediate storage of the fractions can lead to hydrolysis or thermal deterioration or other changes to the substances in the sample, which make subsequent structural analysis more difficult by conventional methods.

In preferred embodiments the method according to the invention is performed by the use of microfluidic devices, in particular of paper-based microfluidic devices, and is designed for high-throughput analysis.

Paper-based microfluidic devices rely on the phenomenon of capillary penetration in porous media. To tune fluid penetration in porous substrates such as paper in two and three dimensions, the pore structure, wettability and geometry of the microfluidic devices can be controlled. Often such devices feature hydrophobic barriers on a hydrophilic paper. For example, aqueous solutions are applied to hydrophilic regions of the paper, which are separated from one another by the hydrophobic barriers. Within the hydrophilic regions, a biological reaction can take place.

In an especially preferred embodiment of the inventive method the bioactivity analysis is performed in dried state of the second fractionated sample flow.

Carrying out the bioactivity analysis using dried samples has the great advantage that any solvents or other liquid substances from the chromatographic separation are removed by evaporation. Such solvents, e. g. methanol or acetonitrile, could negatively influence the performance of a bioactivity test by, for example, inhibiting enzymes. It was found, that for example said paper-based microfluidic devices are particularly suitable to conduct a bioactivity analysis of the second fractionated sample flow in dried state.

In alternative preferred embodiments, the bioactivity analysis is performed on a compartmented support, like customized well-plates.

In especially preferred embodiment, the bioactivity analysis is performed on a paper-based microfluidic device, with hydrophobic encapsulated regions. The hydrophobic encapsulation is - for example - accomplished with said hydrophobic barriers.

Preferably, the bioactivity analysis comprises a microfractionation of the second fractionated sample flow. For the microfractionation, the sample flow from the chromatography eluent may be spotted on the microfluidic device. In preferred embodiments a high number of spots is applied, preferably more than 300 or more than 400 spots per microfluidic device are applied, preferably resulting in a sampling rate of 1 Hz or more. It is especially preferred to use up to 500 spots per microfluidic device, wherein the microfluidic device may preferably be a paper-based microfluidic device having e. g. a DIN A4 format.

Using a microfluidic device, in particular a paper-based microfluidic device, and carrying out the bioactivity tests in the dried form of the samples has the further advantage that the drying process immobilizes the sample on the microfluidic device to a certain extent and therefore prevents neighboring spots from flowing into each other, especially if a high number of spots is used. It is therefore particularly preferred that no resuspension of the samples or spots takes place after the loaded microfluidic device has been dried.

The fractionated spotting is preferably done by a microspotting device (microspotter), e. g. by a three-axis robot. For example, the microspotting device can be programmed to apply a drop of eluate to a precise position on the microfluidic device every second (frequency 1 Hz). In this way, the entire eluate of an HPLC separation can be applied to a total of 500 spots on one microfluidic device, for example. The application quantity per spot can be between 10 - 20 µl, for example.

Fractional spotting with a predefined frequency, e. g. 1 Hz, facilitates the subsequent correlation of structural analysis data and bioactivity data.

In preferred embodiments of the inventive method the microfluidic device is dried e. g. at room temperature after spotting the sample flow. Drying of the microfluidic device which is loaded with the samples is an especially easy and useful measure to provide the sample in dried state, whereby potentially interfering substances, such as solvents from the HPLC, are evaporated and can no longer interfere with the subsequent bioactivity analysis.

In especially preferred embodiments of the inventive method the microfluidic device is compartmented by partly hydrophobization, preferably by the use of a wax or thermal transfer printer, preferably followed by heating. For instance, the compartmented microfluidic device may be provided by printing e. g. circles onto a commercially available paper sheet using a wax-ink printer. By heating the printed paper in an oven (e. g. ~120 °C, ~1 min), the wax will melt and soak into the paper. This forms a circular hydrophobic "cage" for each spot of the sample.

The microfluidic device has the special advantage of being cheap and it may be easily fabricated. Furthermore, the microfluidic device is easily customizable for different sizes or needs.

The described microfluidic device may be used in a microspotting device.

Depending on the properties of the bioactive compound of interest, a corresponding bioactivity assay should be applied in the bioactivity analysis.

In especially preferred embodiments of the inventive method the bioactivity analysis comprises an incubation with at least one indicator and/or bioreporter compound, preferably a bacterial indicator strain and/or a bacterial bioreporter strain.

In particularly preferred embodiments, the bioactivity analysis is carried out using living organisms, in particular living bacteria. Living bacteria are especially useful for testing antimicrobial activities of compounds, e. g. in the search for new antibiotics.

Depending on the respective bioactivity of the bioactive compound of interest it is also possible to apply more than one indicator and/or bioreporter compound, e. g. two or more bacterial bioreporter strains, within one assay.

Bacillus subtilis, for example, is a suitable bacterial reporter strain.

One preferred example of a bacterial reporter strain is Bacillus subtilis carrying the luxABCDE-operon from Photorabdus luminescence as reporter gene (as described in Radeck et al., J Biol Eng. 2013 Dec 2;7(1):29), whose signal can be detected using a chemiluminescence read-out or the beta-galactosidase, whose signal can be detected by colorimetric or fluorescence read-out. This setup allows not only antibacterial bioactivity to be evaluated. If the reporter gene, e. g. beta-galactosidase or luciferase, is cloned behind a promotor that is induced by a specific kind of stress acting on the bacterium (as described in Urban et al., Appl. Environ. Microbiol. 2007 73 and Wex et al., Cell Chem. Biol. 2021; 28 (8), 1242-1252), the expression of the reporter gene also provides information about the potential mode of action for the individual mass-to-charge ratios.

The bioactivity analysis may comprise a coating with a medium (e. g. agar) containing said at least one indicator and/or bioreporter compound, especially bacterial strain. In this context it is referred to e. g. the article of Navid J. Ayon (Metabolites. 2023 May; 13(5): 625) or Tyc et al. (Front Microbiol. 2014; 5: 567) describing comparable agar overlay assays.

After an appropriate incubation of the assay, e. g. at 37 °C or another temperature appropriate for the specific bioreporter strain for one or more hours, e. g. 2 - 4 hours, the reporter signal as well as the antimicrobial activity can be read-out. (Semi)quantitative analysis of the signal can be performed by densitometric image analysis and may be correlated to distinct retention times of the structural profile of the first fractionated sample flow in order to detect and assign bioactive compounds within the fractionated sample flow.

In the context of the screening for new antibiotics, the whole-cell screening assay using bacterial indicator or bacterial bioreporter strains as described above uses an intact bacterium for the testing, making it highly probable that a compound causes an effect in the bacterial cell. If the bioreporter strain is constructed in such a way that it signals the induction of a stress response, which is typically elicited by the action of antibiotics (e.g., the SOS response is induced by many DNA damaging agents), then the compound inducing the bioreporter often has antibacterial activity. Such bioreporters often signal the induction of the stress response at compound concentrations below the grow inhibitory compound concentration. Bioreporter readout can be more sensitive than readout by growth inhibition. In comparison to prior art screening processes, the method according to the invention combines advantageous characteristics of formerly described assays with a higher pace and higher sensitivity.

The incubation for the bioactivity assay can be performed in a BSL1 biosafety laboratory for working with genetically engineered non-pathogenic cells or in a BSL2 laboratory for working with pathogenic cells.

Depending on the respective bioactivity assay the analysis may comprise e. g. densitometric measurements, preferably quantitative or semi-quantitative densitometric measurements, or fluorescence measurements or chemiluminescence measurements or colorimetric measurements or isotope labeling measurements or combinations thereof.

Depending on the bioactivity of the bioactive component to be analyzed, the method according to the invention comprises a correspondingly suitable bioactivity test respectively assay. The bioactivity tests of the bioactivity analysis of the inventive method may cover, e. g., activity tests for potential antibacterial agents, activity tests for potential anticancer drugs (e. g. in living cells like TTC/XTT-test), affinity tests with proteins using fluorescence or bioluminescence (FRET- or BRET-like) for potential inhibitors of (medicinal) relevant proteins (for the inhibition of pathogens like bacteria, fungi or viruses, immune modulation, anti-cancer drugs or other), chemical signaling (like pheromones to attract animals, it could be monitored to which spot a certain species moves), tests for antioxidative features, genotoxicity tests, or other. Further possible targets of the bioactivity analysis include signaling impairment of major cellular biosynthetic pathways or a cellular structure (e.g., DNA, RNA, translation, cell membrane, cell wall, protein integrity, fatty acid synthesis) as it will become apparent for a skilled person.

All those tests could advantageously be carried out in high-throughput using the above described microspotter technology.

In general, the bioactive compounds may be substances of any kind which has a bioactivity, i. e. which may have an influence on a living organism.

The sample to be analyzed, i. e. the sample comprising the at least one bioactive compound, is preferably prepared on the basis of a biological material. The sample may be, e. g. an extract of bacteria, plants or fungi or the sample may be, e. g. a biological fluid or tissue and/or a cell homogenate or an extract thereof. Moreover, the sample may be a natural product or a semi-synthetically produced derivative of a natural product or a mixture of synthetic compounds or any other sample which contains one or more bioactive compound(s).

In especially preferred embodiments of the inventive method the bioactive compounds are pharmaceutically active compounds, like e. g. antibiotics and/or anticancer drugs and/or immune modulating drugs and/or antioxidative compounds. Moreover, the bioactive compounds can be other bioactive compounds, like e. g. modulators of pharmacologically relevant drug targets, pheromones and/or toxic compounds. Moreover, the bioactive compounds can be of interest in view of the analysis of side effects of drugs.

In some embodiments the bioactive compound may be a small molecule, i. e. an organic compound with a low molecular weight (≤ 1000 daltons) or a medium molecular weight (≤ 10000 daltons).

Preferably, the chromatographic separating is performed on the basis of biophysical parameters like e. g. size and/or charge and/or hydrophobicity and/or solubility and/or affinity of the compounds within the sample. In especially preferred embodiments of the inventive method the chromatographic separation is done by high performance liquid chromatography (HPLC), wherein preferably the chromatographic separation is accompanied by the generation of UV-spectra, preferably UV-Vis-spectra. By the generation of UV-spectra during chromatography it is possible to observe the elution of the various substances/compounds in a sample during chromatography.

Preferably, the splitting of the fractionated sample flow into a first fractionated sample flow and a second fractionated sample flow is performed by the use of a T-piece or by another kind of switch or diverter. The splitting of the fractionated sample flow allows for a simultaneous recording of a e. g. mass spectrum (structural analysis) and a fractionated spotting for the bioactivity analysis.

When splitting the fractionated sample flow, preferably the first fractionated sample amounts to 1 to 20 % of the fractionated sample flow, preferably 5 to 15 %, more preferably 10 %. The remaining sample flow, e. g. 90 %, is directed to the fractionated spotting for bioactivity analysis.

In especially preferred embodiments of the inventive method the structural analysis of the first fractionated sample flow is a mass spectrometric analysis. Nevertheless, instead of mass spectrometry, other methods, particularly spectroscopic methods known to the skilled person, can also be used for structural analysis.

The correlation of the structural profile of the first fractionated sample flow and the bioactivity profile of the second fractionated sample flow may be performed by linking retention times of the mass spectrometric analysis and the activity spots of the bioactivity analysis in order to detect and assign the bioactive compound(s), if any. The UV spectrum from the chromatographic separation can also be included in the analysis and can be correlated with the mass spectrometric data and the bioactivity data.

The retention times and the spots on the microfluidic device can be easily linked, when both the start of the sampling of the microspotter and the sampling rate are known. The former can be read-out of the chromatographic software, the latter can be calculated by diverting the total spotting time by the number of spots. When the delay volume of the capillaries is known (which should, ideally, be equal for the MS and the microspotter), the bioactivity (e. g. the luminescence of the reporter strains) of the spots can be linked to m/z values in the mass spectrum and preferably also to peaks in the UV spectrum. This reduces the complexity of the compounds of interest in an extract drastically and facilitates the finding of new (e. g. antimicrobial resp. antibiotic) bioactive compounds. This way, the tedious process of testing either larger fractions (with a multitude of molecules) or single (maybe non-bioactive) molecules in an extract can be skipped and it can be focused only on bioactive, relevant compounds.

In a particularly preferred embodiment, the evaluation of the method according to the invention and especially the correlation of the structural profile and the bioactivity profile is completely automated, whereby, for example, a bioluminescence or another read-out of the bioactivity analysis is also evaluated automatically. Corresponding software can be provided in the form of an app, for example.

In further embodiments of the method according to the invention, the detection and assignment of the bioactive components can be followed by further structure elucidation methods, for example verification of the structure elucidation by orthogonal methods like nuclear magnetic resonance spectroscopy (NMR).

In especially preferred embodiments of the invention the method is used for the development of pharmaceutical compounds, like e. g. antibiotics or anticancer drugs or immune modulating drugs, modulators of drug targets, and/or for the analysis of potentially toxic compounds, like e. g. cell poisons. Moreover, the inventive method may be used, e. g., for the analysis of possible side effects of drugs.

The method according to the invention allows the discovery of bioactive compounds (e. g., antibiotics) by fractionation of the sample and by bioactivity analysis of a part of the fractionated sample flow, wherein preferably the method includes a fractionated spotting for bioactivity analysis. In parallel, structural analysis of the compounds within the fractionated sample flow is done, wherein a part of the fractionated sample flow is split off for structural analysis, in particular mass spectrometry. In especially preferred embodiments paper-based bioactivity tests are used, preferably using bacterial bioreporter strains and/or bacterial indicator strains.

The invention can be used for the high-throughput fractionation and spotting of extracts of, e. g., bacteria, plants, fungi and others, for the subsequent bioactivity testing on the paper-based microfluidic device and their direct assignment to distinct m/z-values of MS analysis, for the discovery of new bioactive compounds (like antibiotics or other).

If needed, sterility can be achieved by filtration of the mobile phases and attaching of a 0.2 µm filter on the outlet, furthermore the microspotter can be operated in a laminar flow hood that can be equipped by a Highly Efficient Particulate Air (HEPA) filter.

Sterilization of the paper-based microfluidic device can be achieved as described elsewhere, e. g. by irradiation or dry heat.

Furthermore, the invention comprises a solid support for bioactivity analysis, having at least one of the following features a. to c.:
a. the solid support is a microfluidic device, preferably a paper-based microfluidic device, and
b. the microfluidic device is compartmented by being partly soaked with wax, and
c. the microfluidic device is intended for fractionated spotting of a liquid sample, followed by drying of the microfluidic device and followed by overlaying with a medium, e. g. agar, containing an indicator or a bioreporter compound, e. g. a bacterial strain, and followed by incubation for performing a bioactivity assay and followed by read-out of the bioactivity assay.

Further details and advantages of the microfluidic device are described above in connection with the method according to the invention. With regard to further features of the microfluidic device, reference is therefore also made to the description above.

Finally, the invention comprises a system for performing a method as described above. The system comprises:
a. A chromatographic device, preferably a HPLC (HPLC = high performance liquid chromatography, formerly referred to as high-pressure liquid chromatography) device, more preferably (U)HPLC (ultra high performance liquid chromatography), for generating a fractionated sample flow;
b. Means for splitting the fractionated sample flow into a first fractionated sample flow and a second fractionated sample flow;
c. A structural analytic device, preferably a mass spectrometric device, for generating a structural profile of the first fractionated sample flow;
d. A bioactivity analytic device, preferably comprising a microfluidic device for fractionated spotting of a liquid sample, for generating a bioactivity profile of the second fractionated sample flow;
e. Means for correlation of the structural profile and a bioactivity profile in order to detect and assign bioactive compounds within the fractionated sample flow.

The system can be used in particular for high-throughput analysis of bioactive components in a sample of biological material as described above.

Preferably, microfluidic means are used. In particular, the bioactivity analysis can be carried out using microfluidic means.

Preferably, the inventive system combines a microfluidic device with microspotting means. In especially preferred embodiments a microspotter device is used for loading the second fractionated sample flow onto a support for carrying out the bioactivity analysis. The microspotter device is preferably designed in the form of a three-axis robot as described above.

Preferably, a microfluidic device is used as support for the bioactivity analysis. In principle, it is also possible to use other supports, such as standard microwell plates or others.

In further embodiments of the inventive system, the microspotter device can have multiple levels that contain several microfluidic devices, and can have a sub-assembly that facilitates the rotation, translation, or other movement of the layers of the microfluidic devices.

For further automation, a small camera could be added to the microspotter device, preferably to a spotting head of the device, and both the microfluidic devices and the samples could be branded with, e. g., QR codes. By manually scanning the sample vials, a potential software could assign the QR codes of the samples to the QR codes that the spotting device reads out from the microfluidic device.

In particular, a standard mass spectrometer can be used for structural analysis. In preferred embodiments the system comprises a hyphenated spectrometer for the simultaneous detection and assigning of bioactive compounds.

In especially preferred embodiments the inventive system may be configured to be usable for the described microfluidic devices but also for conventional (standard) multiwell-plates. The microfluidic device of the described system is very cheap as it may be based on a simple paper which can be printed with, e. g., a commercially available wax printer. Thus, the inventive device and system can be configured to meet the customizability of unique microfluidic device designs and functional with both standard well-plates and microfluidic devices.

Current approaches for microfluidic research and fractionation rely heavily on machines that utilize plastic well-plates, which constrains the machine to a selected number of well-plate sizes. In contrast to such conventional approaches the present invention allows for the use of the much more flexible microfluidic devices and may be configured to be capable of both plastic well-plates and microfluidic devices.

In preferred embodiments, the inventive system couples a device for fractionated spotting to a mass spectrometer by using a T-piece or other switch or diverter, preferably a T-piece, for the simultaneous spotting and recording of spectra, especially MS-spectra.

With regard to further features of the system according to the invention, reference is also made to the above description in connection with the description of the method.

The invention is an especially useful tool for the accelerated search for bioactive compounds. It may directly provide UV- and MS-spectrum data, so that the scientist can quickly focus on relevant compounds.

The invention could be used, e. g., in both academia and pharmaceutical industry for the discovery of new bioactive compounds or tests concerning, e. g., toxicity or for the explanation and estimation of undesired side effects of drugs.

Moreover, the method and system according to the invention can be used, for example, to assess drug effects and their toxicity. Furthermore, the method and system according to the invention can be used, for example, to identify new drug targets by analyzing metabolic changes following drug administration.

### BRIEF DESCRIPTION OF THE DRAWINGS

Various features and advantages of the present invention may be more readily understood with reference to the following detailed description taken in conjunction with the accompanying drawings in which:
- Fig. 1: Schematic illustration of a system according to the invention;
- Fig. 2: Processing of the microfluidic device;
- Fig. 3: Conversion of a luminescence read-out of a bioactivity assay into a chromatogram of bioactivity (bioactivity profile);
- Fig. 4: Schematic overview on the experimental setup and the overlay of the bioactivity chromatogram (bioactivity profile) with the total ion current chromatogram (structural profile); and
- Fig. 5: Total ion current chromatogram (structural profile) and extracted ion chromatograms of the bioactive substances within the sample.

### DESCRIPTION OF PREFERRED EMBODIMENTS

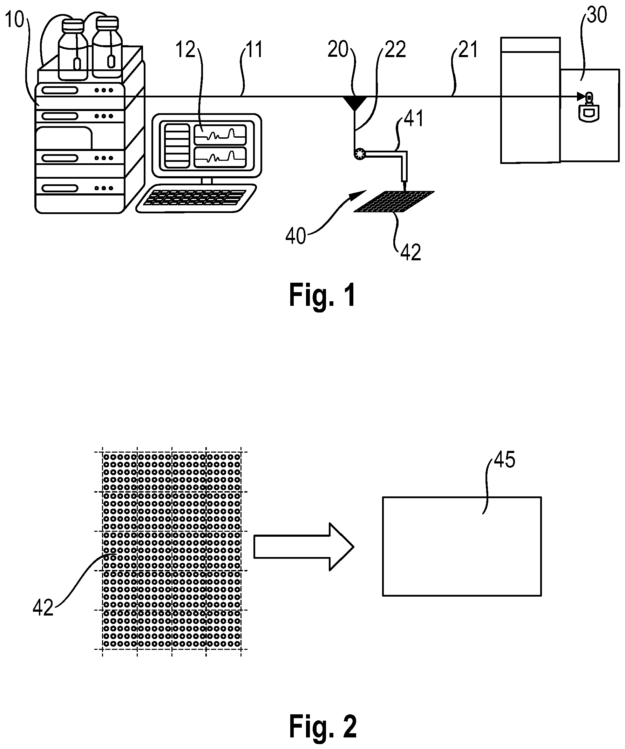

**Fig. 1** schematically illustrates a system according to the invention, wherein the system is to be used for analyzing bioactive compounds. Preferably, the system includes microfluidic means and allows for high-throughput analysis. The system comprises a chromatographic device 10 for separation of a loaded sample which is preferably prepared on the basis of a biological material. Preferably, the chromatographic device 10 is a HPLC device, which generates a fractionated sample flow 11. Preferably, UV spectra 12 are detected and monitored during separation in order to visualize the distribution of the separated components within the fractionated sample flow 11, for example the peptides or proteins within the sample.

The system comprises means 20 for splitting the fractionated sample flow 11 into a first fractionated sample flow 21 and a second fractionated sample flow 22. The means 20 for splitting may be a T-piece or another kind of switch or diverter.

Moreover, the system comprises an analytic device 30, preferably a mass spectrometric (MS) device, for generating a structural profile of the first fractionated sample flow 21. Preferably, the structural profile is a distribution of MS spectra within the fractionated sample flow 21 respectively over the consecutive fractions of the fractionated sample flow 21.

Moreover, the system comprises a bioactivity analytic device 40. Preferably, the bioactivity analytic device 40 comprises a microspotter 41 and a microfluidic device 42 for fractionated spotting of the second fractionated sample flow 22. Preferably, the microspotter 41 is a three-axis robot, comparable to a CNC machine.

Preferably, the microspotting device (microspotter) 41 comprises precise stepping motors that are exploited for a precise spotting of the HPLC eluate (i. e. the second fractionated sample flow 22) onto a compartmented support, preferably the microfluidic device 42. The head of the microspotter 41 leads the outlet of the HPLC, a capillary, and moves it over the microfluidic device 42. The eluate, which was fractionated via (U)HPLC (Ultra High Performance Liquid Chromatography), is splitted using the T-piece 20 after being analyzed by a UV-Vis detector. Roughly 10 % of the eluate (first fractionated sample flow 21) is transferred into the mass spectrometer 30, the rest (second fractionated sample flow 22) is transferred to the microspotter 41, preferably a three-axis robot, for real-time sampling onto the microfluidic device 42. A capillary of the microspotter 41 is descended at every spot, to release a fraction of the eluate onto the microfluidic device 42, which is held on the three-axis robot 41 and left to dry. The dried microfluidic device 42 is then prepared for incubation in order to perform the bioactivity assay.

Using e. g. a G-code based command, the head of the microspotter 41 is moved freely from spot to spot on the microfluidic device 42. It is descended at every spot, to release a fraction of the eluate onto the microfluidic device 42. After the fractionation, the microfluidic device 42 is left to dry.

In a preferred embodiment the three-axis robot is capable of moving in one or more directions and/or about one or more axes, with a capillary, microtube or tube, being fed a constant or variant interval eluent containing one or more of bacterial, antibiotic, or other bioactive compound that is to be deposited on the microfluidic paper analytical device (i.e. the microfluidic device 42), containing none or one or more bioactive compound(s). The three-axis robot may consist of an enclosure to minimize foreign contamination, a holding apparatus to stabilize the microfluidic device 42, a guide apparatus to position the microfluidic device 42, and a cleansing apparatus to sterilize the microfluidic device 42, if necessary.

To have distinct spots where the eluate (i. e. the second fractionated sample flow 21) can be spotted on without migrating over the paper, parts of the paper are preferably hydrophobized. Preferably, the microfluidic device 42 is a paper printed with wax in order to provide a compartmented support for the spots of the second fractioned sample flow 22.

This compartmented microfluidic device 42 may be provided by printing circles onto a commercially available paper sheet using a wax-ink printer (or a comparable printing technique such as, e. g., thermal transfer printing). By heating the printed paper in an oven (e. g. ~120 °C, ~1 min), the wax will melt and soak into the paper. This forms a circular hydrophobic "cage" for each spot of the fractionated sample flow 22.

Preferably after drying the microfluidic device 42 with the spotted sample, it is subjected to a bioactivity assay in order to generate a bioactivity profile of the second fractionated sample flow 22. The bioactivity assay provides a profile (spectrum) of bioactivity data over the consecutive fractions of the fractionated sample flow 22. Therefore, the bioactivity analytic device 40 comprises means for performing the bioactivity assay and means for read-out of the assay.

The first fractionated sample flow 21 (eluate of the (U)HPLC 10) is transferred to the mass spectrometer 30, with the remainder of the fractionated sample flow (second fractionated sample flow 22) being transferred to the three-axis robot 41 for real-time sampling onto the microfluidic device 42. The capillary is descended at every spot, to release a fraction of the eluate onto the microfluidic device 42, which is held on the three-axis robot 41 and left to dry. The dried microfluidic device 42 is then prepared for incubation in order to perform the bioactivity assay.

Moreover, the system comprises means (not shown) for correlation of the structural spectrum as generated by the analytic device 30 and the bioactivity spectrum as generated by the bioactivity analytic device 40 in order to detect and assign bioactive compounds within the fractionated sample flow 11. Preferably, the means for correlation are software means which may be provided in the form of an app.

**Fig. 2** illustrates the microfluidic device 42 on which the second fractioned sample flow 22 is spotted into the single circular compartments of the microfluidic device 42. After drying the loaded microfluidic device 42 is subjected to the respective bioactivity assay 45.

To detect e. g. antibacterial activity, the microfluidic device 42 can be incubated with a susceptible bacterial indicator strain showing growth inhibition in the position where the antibacterial agent has been spotted. Alternatively, it can also be incubated with a bioreporter strain, or even more than one strain in parallel signaling impairment of a cellular biosynthetic pathway or a cellular structure (e. g., DNA, RNA, translation, cell membrane, cell wall, protein integrity, fatty acid synthesis). The reporter strains can carry e.g., the luxABCDE-operon from *Photorabdus luminescence* as reporter gene (as described in Radeck et al., J Biol Eng. 2013 Dec 2;7(1 ):29), whose signal can be detected using a chemiluminescence read-out, or the beta-galactosidase, whose signal can be detected by colorimetric or fluorescence read-out, or another enzyme, whose activity generates color, light or fluorescence emission as well as a genetic construct expressing a protein that emits fluorescence. The bioreporter setup allows not only antibacterial bioactivity to be evaluated but also provides information about the potential mode of action for the individual mass-to-charge ratios.

For the incubation, the microfluidic device 42 may be overlaid with agar containing the individual bacterial indicator or bioreporter strains. The growth inhibition and bioreporter signal is read-out after a defined time period and correlated to distinct retention times.

Quantitative densitometric analysis of the bioactivity signal can be performed in silico, e. g. by using open-source software like ImageJ.

For correlation of the structural profile of the fractionated sample flow as generated by the analytic device 30 and the bioactivity profile of the fractionated sample flow as generated by the bioactivity analytic device 40 the retention times and the spots on the microfluidic device 42 can be linked, when both the start of the sampling of the microspotter 41 and the sampling rate are known. The former can be read-out of the chromatographic software, the latter can be calculated by diverting the total spotting time by the number of spots. When the delay volume of the capillaries is known (which should, ideally, be equal for the structural and preferably the mass spectrometric analysis 30 and the microspotter 41), the bioactivity (e.g. the luminescence of the reporter strains) of the spots can be linked to peaks in the UV spectrum and to m/z values in the mass spectrum. This reduces the complexity of the (relevant) compounds in an extract drastically and facilitates the finding of new (antimicrobial respectively antibiotic) bioactive compounds. This way, the tedious process of testing either larger fractions (with a multitude of molecules) or single (maybe non-bioactive) molecules in an extract can be skipped and it can be focused only on bioactive, relevant compounds.

The inventive method and system have been tested on standard substances with a mixture of known antibiotics, namely ciprofloxacin, trimethoprim and moxifloxacin. The sample contained 5 µg ciprofloxacin, 2.5 µg trimethoprim and 2.5 µg moxifloxacin. The sample was loaded onto a HPLC column and the column was run for about 10 min. The eluate of the first 60 sec was discarded and the eluate for up to 9:45 min was used for the further analysis.

The eluate of the column (fractionated sample flow) was split into a first fractionated sample flow (10 %) and a second fractionated sample flow (90 %). The first fractionated sample flow was subjected to mass spectrometry. The second fractionated sample flow was spotted (fractionation spotting, each spot 10 - 20 µl, frequency 1 Hz) onto a microfluidic device, wherein up to 500 spots are placed on one microfluidic device (DIN A4 format). The loaded microfluidic device was dried at room temperature for about 1 h. During drying the solvents used in HPLC, like acetonitrile and methanol, evaporated and could not intervene with subsequent bioactivity assays anymore. It was possible to store the loaded and dried microfluidic devices at 4 - 10 °C for days.

The loaded and dried microfluidic devices were subjected to bioactivity assays. For the bioactivity assay the microfluidic devices were overlayed with agar containing bacterial reporter or indicator strains. Cultures of respective bacterial strains have been prepared in advance in liquid agar cultures. The liquid agar cultures were poured onto the loaded and dried microfluidic devices such that an about 1 mm thick layer of solidified agar was formed within about 20 min. The bacteria used for detection were thus practically immobilized. The preparations were incubated at 37 °C. Already after 2 - 4 h, it was possible to see at which spots a bioactive effect occurred, recognizable by a luminescence reaction or a first indication of a zone of inhibition. Zones of growth inhibition (halo) can be clearly assessed after 18 h.

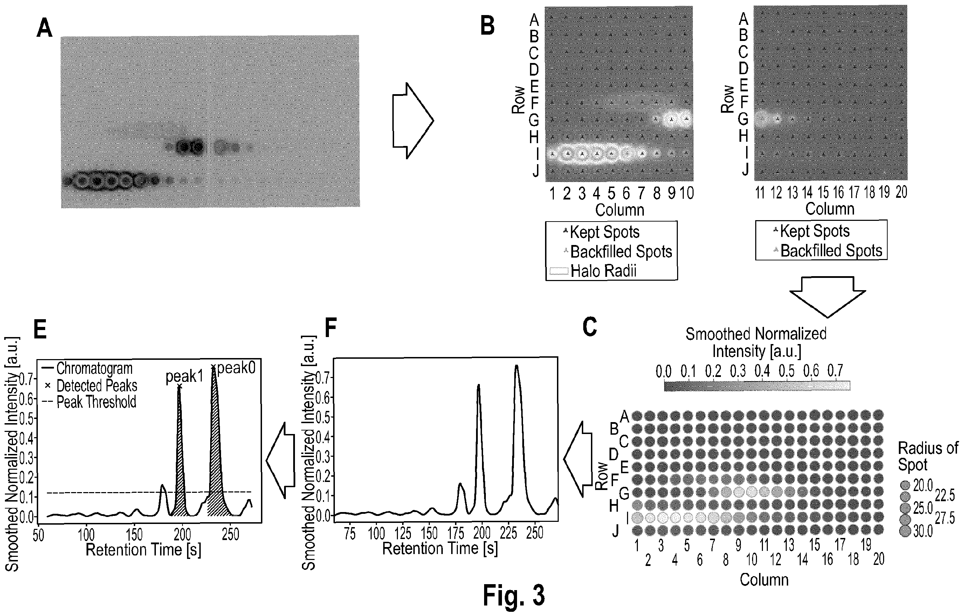

**Fig. 3** illustrates the conversion of a luminescence read-out (Fig. 3A) of the bioactivity assay of an antibiotics containing standard (as described for Fig. 2) as part of the inventive method into a chromatogram of bioactivity respectively a bioactivity profile (Fig. 3E). The luminescence read-out of Fig. 3A is obtained at a distinct wavelength in a plate reader. Via a digitalization and a normalization of the spot intensity and the radius of the spots or halos (Fig. 3B and C) the bioactivity data are connected to the retention time of the chromatographic separation according to the first step of the inventive method in order to obtain a chromatographic presentation of the bioactivity data (Fig. 3D and 3E). This chromatographic presentation is a very advantageous presentation of the bioactivity profile of the sample which can be directly correlated with the structural mass spectrometric profile of the sample in order to detect and assign bioactive compounds.

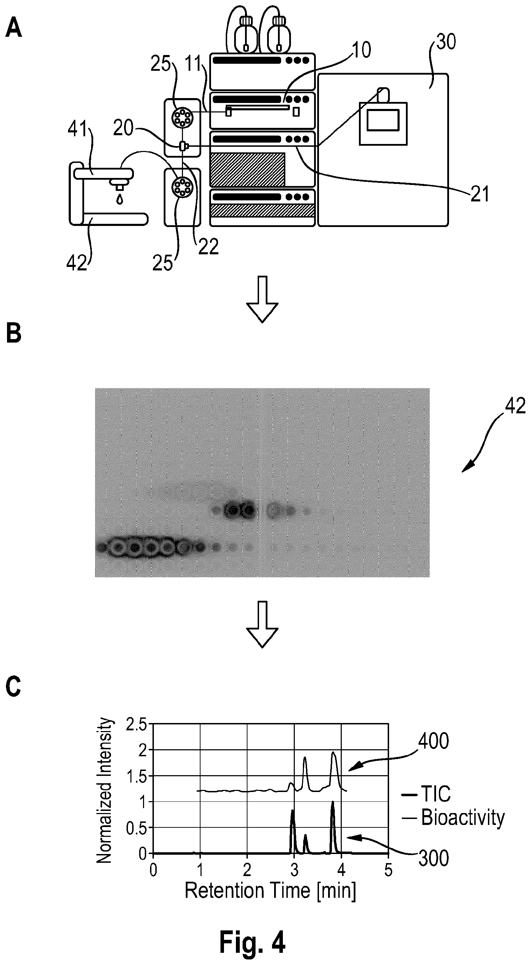

**Fig. 4** shows the general working setup (A) with the (U)HPLC (10) hyphenated via a T-piece (20) to two switchable valves (25), the fractionated sample flow (11) is diverted into a first fractionated sample flow (21) and a second fractionated sample flow (22). The second fractionated sample flow (22) is larger (~90%) and is diverted to the microspotter (41), wherein the second fractionated sample flow (22) is spotted on the microfluidic device respectively the paper-based support 42. The first fractionated sample flow (21) is smaller (~10%) and is diverted to the mass spectrometer. (B) shows an image of the paper-analytical device (42) after successful spotting and incubation with a reporter strain. Here, a mixture of antibiotics was used, namely trimethoprim, ciprofloxacin and moxifloxacin. (C) After analysis of the image shown in (B), a bioactivity chromatogram (400) can be obtained which represents the bioactivity profile. When comparing the bioactivity chromatogram (400) with the total ion current chromatogram (TIC) (300) which represents the structural profile, a correlation between the two can be drawn. When the delay volume of both paths is the same, a direct assignment of the bioactivity peaks to the peaks in the TIC can be drawn. In more complex samples (with several compounds eluting at the same or comparable retention time), a comparison of the peak form helps to assign the bioactivity peak to the respective m/z.

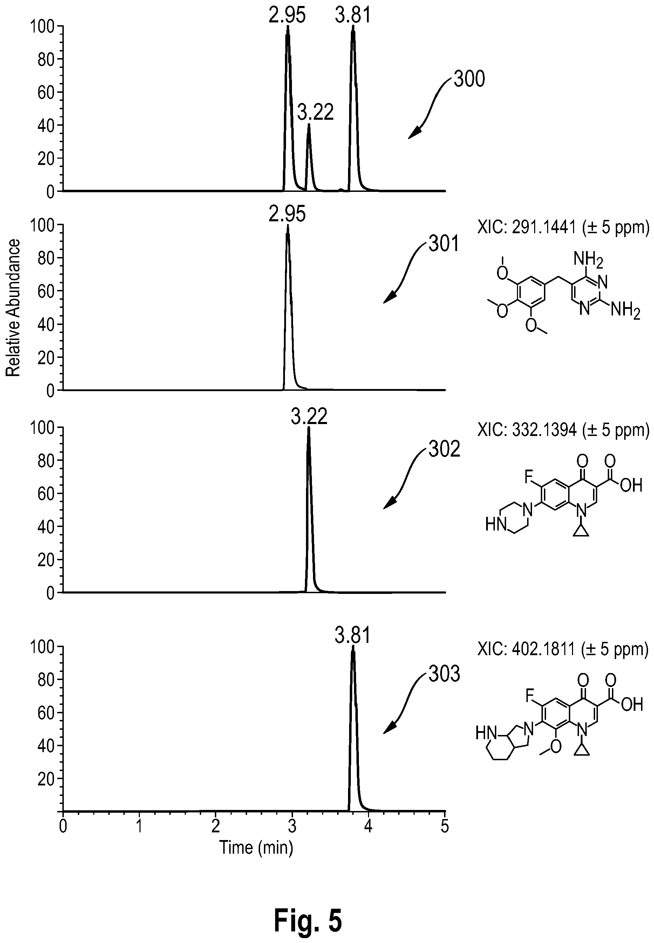

**Fig.** 5 shows tested the total ion current chromatogram (TIC) (300) of the spotted sample shown in Fig. 4C as well as the extracted ion chromatogram (XIC) for the tested compounds trimethoprim (301), ciprofloxacin (302) and moxifloxacin (303). This detection and assignment of relevant bioactive masses strongly reduces the complexity of the sample and streamlines the process of analyzing and identifying bioactive compounds.

In this exemplary embodiment the inventive method and system was tested for the search of antibiotic compounds. Nevertheless, the present invention is not restricted to the analysis of antibiotic compounds but could be applied to a wide variety of different bioactive compounds.

Similarly, extracts from natural sources like bacteria or fungi or others may be tested for bioactivity of the contained compounds.

## Claims

1. Method for identifying bioactive compounds from complex mixtures, comprising the following steps:
a. Providing a sample comprising at least one bioactive compound,
b. Chromatographic separation of the sample for generating a fractionated sample flow (11),
c. Splitting the fractionated sample flow (11) into a first fractionated sample flow (21) and a second fractionated sample flow (22),
d. Structural analysis of the first fractionated sample flow (21) for generating a structural profile (300) of the first fractionated sample flow,
e. Bioactivity analysis of the second fractionated sample flow (22) for generating a bioactivity profile (400) of the second fractionated sample flow,
f. Correlating the structural profile (300) of the first fractionated sample flow (21) and the bioactivity profile (400) of the second fractionated sample flow (22) in order to detect and assign bioactive compounds within the fractionated sample flow.

2. Method according to claim 1, wherein the bioactivity analysis is performed in dried state of the second fractionated sample flow (22).

3. Method according to claim 1 or claim 2, wherein the bioactivity analysis is performed on a microfluidic device (42), preferably a paper-based microfluidic device, wherein preferably the second fractionated sample flow (22) is spotted on the microfluidic device (42).

4. Method according to claim 3, wherein the microfluidic device (42) is dried after spotting the second fractionated sample flow on the microfluidic device.

5. Method according to claim 3 or claim 4, wherein the microfluidic device (42) is compartmented by partly hydrophobization, preferably by the use of a wax printer.

6. Method according to one of the preceding claims, wherein the bioactivity analysis comprises an incubation with at least one indicator and/or bioreporter compound, preferably a bacterial indicator strain and/or a bacterial bioreporter strain.

7. Method according to claim 6, wherein the bioactivity analysis comprises a coating with a medium containing said at least one indicator and/or bioreporter compound.

8. Method according to one of the preceding claims, wherein the bioactive compounds are pharmaceutically active compounds.

9. Method according to one of the preceding claims, wherein the chromatographic separating is performed on the basis of biophysical parameters, preferably by high performance liquid chromatography (HPLC), wherein preferably the chromatographic separation is accompanied by the generation of UV-spectra.

10. Method according to one of the preceding claims, wherein the splitting of the fractionated sample flow (11) into a first fractionated sample flow (21) and a second fractionated sample flow (22) is performed by the use of a T-piece (20).

11. Method according to one of the preceding claims, wherein the structural analysis of the first fractionated sample flow is a mass spectrometric analysis.

12. Method according to one of the preceding claims, wherein the method is used for the development of pharmaceutical compounds and/or for the analysis of potentially toxic compounds.

13. Solid support (42) for bioactivity analysis, wherein
- the solid support (42) is a microfluidic device, and
- the microfluidic device is compartmented by being partly soaked with wax, and
- the microfluidic device is intended for fractionated spotting of a liquid sample, followed by drying of the microfluidic device and followed by overlaying with a medium, e. g. agar, containing an indicator or a bioreporter compound, e. g. a bacterial strain, and followed by incubation for performing a bioactivity assay and followed by read-out of the bioactivity assay.

14. System for performing a method of one of the claims 1 to 12, wherein the system comprises:
a. A chromatographic device (10), preferably a HPLC device, for generating a fractionated sample flow (11);
b. Means (20) for splitting the fractionated sample flow (11) into a first fractionated sample flow (21) and a second fractionated sample flow (22);
c. A structural analytic device (30), preferably a mass spectrometric device, for generating a structural profile (300) of the first fractionated sample flow (21),
d. A bioactivity analytic device (40), preferably comprising a microfluidic device (42) for fractionated spotting of a liquid sample, for generating a bioactivity profile (400) of the second fractionated sample flow (22),
e. Means for correlation of the structural profile (300) and a bioactivity profile (400) in order to detect and assign bioactive compounds within the fractionated sample flow.
